(19) Europäisches Patentamt
European Patent Office
Office européen des brevets

(11) **EP 3 169 903 B1**

(12) **EUROPÄISCHE PATENTSCHRIFT**

(45) Veröffentlichungstag und Bekanntmachung des Hinweises auf die Patenterteilung:
**29.08.2018   Patentblatt 2018/35**

(21) Anmeldenummer: **15739268.9**

(22) Anmeldetag: **17.07.2015**

(51) Int Cl.:
**F04D 15/00** *(2006.01)*

(86) Internationale Anmeldenummer:
**PCT/EP2015/066417**

(87) Internationale Veröffentlichungsnummer:
**WO 2016/009043 (21.01.2016 Gazette 2016/03)**

(54) **BESTIMMUNG DES FÖRDERSTROMS EINER PUMPE**

DETERMINING THE DELIVERY RATE OF A PUMP

DÉTERMINATION DU DÉBIT D'UNE POMPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2014   DE 102014214033**

(43) Veröffentlichungstag der Anmeldung:
**24.05.2017   Patentblatt 2017/21**

(73) Patentinhaber: **KSB SE & Co. KGaA
67227 Frankenthal (DE)**

(72) Erfinder:
• **LAUE, Stefan
  55597 Wöllstein (DE)**
• **SCHAAB, Jochen
  67551 Worms-Pfeddersheim (DE)**

(56) Entgegenhaltungen:
EP-A1- 2 696 175          DE-A1-102009 022 107
JP-A- 2004 108 177       JP-A- 2006 307 682

**Beschreibung**

Die Erfindung betrifft ein Verfahren und eine Anordnung zur Bestimmung des Förderstroms einer Pumpe.

Die Fördermenge einer Pumpe ist eine bedeutende Betriebsgröße. Es ist möglich, den Förderstrom direkt zu messen. Dabei kommen beispielsweise magnetisch induktive Durchflussmessgeräte zum Einsatz. Diese Durchflussmessgeräte sind häufig sehr kostspielig und erfordern einen zusätzlichen apparativen Aufwand.

Eine weitere Möglichkeit zur Bestimmung des Förderstroms besteht in indirekten Methoden. Dabei kommen Förderhöhen-Förderstrom-Zusammenhänge der Pumpe, die auch als H(Q)-Kennlinien bekannt sind, zum Einsatz. Bei diesen Förderhöhen-Förderstrom-Zusammenhängen ist die Förderhöhe H über dem Förderstrom Q aufgetragen.

Weitere Kennlinien, die bei der indirekten Bestimmung der Fördermenge zum Einsatz kommen, sind Leistung- Förderstrom-Zusammenhänge der Pumpe, die auch als P(Q)-Kennlinien bezeichnet werden.

Insbesondere bei Kreiselpumpen ermittelt der Hersteller solche Kennlinien. Die charakteristische Form der Kennlinie hängt von der Pumpenbauart wie Laufrad, Pumpengehäuse und der Drehzahl ab.

Bei der indirekten Bestimmung der Fördermenge über H(Q)-Kennlinien bzw. P(Q)-Kennlinien ist eine Bestimmung dann schwierig, wenn die Kennlinien sehr flach verlaufen bzw. zunächst ansteigen und dann wieder abfallen. Bei flachen Kennlinien ist der ermittelte Förderstrom mit einem großen Fehler behaftet, da bereits sehr kleine Abweichungen der Förderhöhe bzw. der Leistung zu sehr großen Änderungen beim ermittelten Förderstrom führen.

Soll die Fördermenge beispielsweise aus der Druckdifferenz zwischen Druck und Saugseite der Pumpe aus einer H(Q)-Kennlinie bestimmt werden, so muss diese eindeutig sein. Dabei muss jedem H-Wert genau ein Q-Wert zuordenbar sein. In der Praxis ist diese Bedingung oft nicht erfüllt. Die H(Q)-Kennlinien sind entweder zu flach oder haben zunächst einen Anstieg und dann wieder einen Abfall, sodass zu jedem H-Wert zwei Förderstromwerte zuordenbar sind. Das Problem besteht auch, wenn der Förderstrom mittels einer gemessenen Leistungsaufnahme aus der P(Q)-Kennlinie bestimmt werden soll. Auch der Verlauf solcher P(Q)-Kennlinien ist oft flach und nicht eindeutig.

In der WO 2005/064167 A1 wird ein Verfahren zur internen Mengenmessung einer Kreiselpumpe mit Druckaufnehmern beschrieben. Die Druckaufnehmer erfassen einen von der Kreiselpumpe erzeugten Differenzdruck. Mittels einer Einheit wird die Fördermenge Q aus dem Differenzdruck ermittelt. Dabei wird sowohl die Förderhöhe als auch die Leistung herangezogen.

Die DE 10 2009 022 107 A1 beschreibt ein Verfahren zur Betriebspunktsbestimmung einer Kreiselpumpe. Dabei werden betriebspunktabhängige Messgrößen von Sensoren erfasst und während des Betriebs ausgewertet. Der Betrieb wird aus mechanischen Messgrößen bestimmt. Mittels einer Frequenzanalyse wird eine zum Drehklang der Pumpe linear proportionale Frequenz ermittelt. Aus der Frequenz wird die Drehzahl ermittelt, wobei aus der schlupfbedingten Drehzahl- Drehmoment-Abhängigkeit des Asynchronmotors der Betriebspunkt bestimmt wird.

Aus der EP 2 696 175 A1 ist ein weiteres Verfahren zur Bestimmung des Förderstroms einer Pumpe bekannt. Aufgabe der Erfindung ist es, ein Verfahren zur Bestimmung des Förderstroms anzugeben, das zuverlässig ist und mit einem möglichst geringen messtechnischen Aufwand verbunden ist. Das Verfahren soll auch bei Pumpen mit flachen Kennlinien zuverlässige Werte für den Förderstrom liefern. Dabei sollen Fehlerquellen minimiert werden.

Diese Aufgabe wird erfindungsgemäß dadurch gelöst, dass zunächst die Werte der Förderhöhe, genauer der sogenannten reduzierten Förderhöhe, und der Leistung der Pumpe ermittelt werden. Unter der reduzierten Förderhöhe wird die Förderhöhe reduziert um den - aufgrund der noch nicht bestimmten Fördermenge zunächst noch unbekannten - geschwindigkeitsabhängigen Anteil verstanden. Die reduzierte Förderhöhe wird im Folgenden vereinfachend Förderhöhe genannt. Über einen funktionellen Zusammenhang wird dann für die Förderhöhe und die Leistung jeweils eine Wahrscheinlichkeitsdichtefunktion berechnet. Aus einem Förderhöhen-Förderstrom-Zusammenhang und der Wahrscheinlichkeitsdichtefunktion der Förderhöhe wird eine erste Wahrscheinlichkeitsdichtefunktion des Förderstroms ermittelt. Aus einem Leistungs-Förderstrom-Zusammenhang und der Wahrscheinlichkeitsdichtefunktion der Leistung wird eine zweite Wahrscheinlichkeitsdichtefunktion des Förderstroms ermittelt. In einem nächsten Schritt wird aus der ersten und zweiten Wahrscheinlichkeitsdichtefunktion des Förderstroms eine kombinierte Wahrscheinlichkeitsdichtefunktion ermittelt. Der Förderstrom wird aus dieser kombinierten Wahrscheinlichkeitsdichtefunktion bestimmt.

Erfindungsgemäß werden Daten aus dem Förderhöhen-Förderstrom-Zusammenhang mit Daten aus dem Leistung- Förderstrom-Zusammenhang so fusioniert, dass Fehler bei der Bestimmung des Förderstroms gezielt minimiert werden. Im Gegensatz zu herkömmlichen Verfahren wird nicht zuerst aus einer H(Q)-Kennlinie ein erster Wert für den Förderstrom und dann aus einer P(Q)-Kennlinie ein zweiter, davon völlig getrennter Wert für den Förderstrom entwickelt, sondern es kommt bei dieser erfindungsgemäßen Sensordatenfusion zu einer Verschmelzung der Daten über Wahrscheinlichkeitsdichtefunktionen.

Das erfindungsgemäße Verfahren liefert besonders genaue und stabile Werte für den Förderstrom. Ein entscheidender Vorteil besteht dabei in einer optimalen Gewichtung der Kennlinien je nach deren Qualität. Bei flach verlaufenden Kennlinien führt eine kleine Abweichung der Förderhöhe bzw. der Leistung zu großen Fehlern beim Förderstrom. Durch Anwendung der Wahrscheinlichkeitsdichtefunktionen wird bei dem erfindungsgemäßen Verfahren die Kennlinie mit dem flacheren Verlauf in der Nähe des aktuellen Betriebspunkts automatisch weniger stark gewichtet als die Kennlinie mit dem steileren Verlauf. Je steiler der Verlauf in der Nähe des aktuellen Betriebspunkt desto stärker die Gewichtung. Dadurch entfällt eine gesonderte Behandlung nicht monotoner, mehrdeutiger Kennlinien. Die Mehrdeutigkeiten in den Kennlinien werden automatisch eliminiert.

Zur Durchführung des Verfahrens wird eine Anordnung eingesetzt, die Sensoren aufweist, welche eine Druckdifferenz zwischen Saug- und Druckseite der Pumpe bestimmt. Weiterhin kommt dabei vorzugsweise ein Gerät zur Bestimmung der Wirkleistung und der Ansteuerfrequenz des Motors der Pumpe zum Einsatz. Vorzugsweise handelt es sich dabei um einen Frequenzumrichter, der diese Daten während des Betriebs liefert.

Die Anordnung weist mindestens eine Einheit auf, welche diese Messdaten erfasst. Dabei handelt es sich um eine elektronische Auswerteeinheit. Die Einheit verfügt über einen Datenspeicher, in dem Förderhöhen-Förderstrom-Zusammenhänge und Leistungs-Förderstrom-Zusammenhänge der Pumpe hinterlegt sind. Die Einheit weist entsprechende Signaleingänge auf.

Vorzugsweise wird die Wahrscheinlichkeitsdichtefunktion der Förderhöhe bzw. der Leistung über Funktionen berechnet, die ein ausgeprägtes Maximum aufweisen. Beispielsweise kann eine Dreiecksfunktion verwendet werden. Als besonders günstig hat sich dabei eine Normalverteilungsdichtefunktion, im folgenden als Gaußfunktion bezeichnet, als Wahrscheinlichkeitsdichtefunktion der Förderhöhe und der Leistung erwiesen.

Erfindungsgemäß wird die Wahrscheinlichkeitsdichtefunktion der Förderhöhe auf einen Förderhöhen-Förderstrom-Zusammenhang angewandt: Über die H(Q)-Kennlinie wird jedem Förderstromwert die Wahrscheinlichkeitsdichte der zugehörigen Förderhöhe zugeordnet. Durch anschließende Normierung, derart dass das Integral über die Wahrscheinlichkeitsdichtefunktion 1 ist, ergibt sich eine erste Wahrscheinlichkeitsdichtefunktion für den Förderstrom.

Analog zum letzten Schritt wird in einem weiteren Schritt die Wahrscheinlichkeitsdichtefunktion der Leistung auf einen Leistung-Förderstrom-Zusammenhang angewandt: Über die P(Q)-Kennlinie wird jedem diskreten Förderstromwert die Wahrscheinlichkeitsdichte der zugehörigen Leistung zugeordnet. Durch anschließende Normierung, derart dass das Integral über die Wahrscheinlichkeitsdichten 1 ist, ergibt sich eine zweite Wahrscheinlichkeitsdichtefunktion für den Förderstrom.

Bei einer besonders günstigen Variante des Verfahrens, wird die kombinierte Wahrscheinlichkeitsdichtefunktion des Förderstroms durch Multiplikation der ersten Wahrscheinlichkeitsdichtefunktion mit der zweiten Wahrscheinlichkeitsdichtefunktion des Förderstroms und anschließender Normierung ermittelt. Bei einer besonders günstigen Variante des Verfahrens wird der Förderstrom als Erwartungswert dieser Wahrscheinlichkeitsdichtefunktion ermittelt. Alternativ kann der gesuchte Förderstrom auch als der dem Maximalwert dieser Funktion zugehörige Förderstrom bestimmt werden.

Durch die multiplikative Verknüpfung der beiden Wahrscheinlichkeitsdichtefunktionen des Förderstroms werden Fehler infolge von Messunsicherheiten minimiert.

Bei einer Variante der Erfindung werden die Leistung und die Drehzahl aus der Motoransteuerfrequenz und der Wirkleistung mittels eines Algorithmus ermittelt.

Bei einer Variante der Erfindung werden die H(Q)-Kennlinien bzw. P(Q)-Kennlinien interpoliert und/oder extrapoliert. Dazu wird eine bestimmte Anzahl von Stützpunkten vorgegeben. Zwischen den Stützpunkten kann beispielsweise eine lineare Interpolation erfolgen. Um Fehler möglichst gering zu halten, wird eine möglichst große Anzahl an Stützstellen verwendet.

Alternativ können die Kennlinien auch als Funktion hinterlegt sein, beispielsweise in Form eines Polynoms.

Nach einer Ausgestaltung der Erfindung werden der Leistungs-Förderstrom-Zusammenhang und ein ermittelter Wert der Leistung bei bekanntem Förderstrom durch eine Offsetkorrektur in Einklang gebracht.

Es hat sich herausgestellt, dass bei dem erfindungsgemäßen Verfahren besonders genaue Ergebnisse für den Förderstrom ermittelt werden, wenn die P(Q)-Kennlinie eine drehzahlabhängige Offsetkorrektur erfährt. Dazu wird die für einen bestimmten Förderstrom Q, vorzugsweise Q=0, bestimmte Leistung mit dem Wert der P(Q)-Kennlinie verglichen. Die Abweichung wird dann nach Art einer Einpunkt-Kalibrierung angepasst.

Statt der beschriebenen Umrechnung der Förderhöhe und der Wellenleistung auf die Nenndrehzahl kann eine Umrechnung der Förderhöhe und der Wellenleistung auf eine andere bestimmte Drehzahl erfolgen. Alternativ kann anstelle der Umrechnung der Förderhöhe und der Wellenleistung auf eine vorgegebene Drehzahl eine Umrechnung der Kennlinien, d.h. des Förderstrom-Förderhöhen-Zusammenhangs der Pumpe, des Leistungs-Förderstrom-Zusammenhangs der Pumpe sowie der Wahrscheinlichkeitsdichtefunktionen der Förderhöhe und der Wellenleistung gemäß der bekannten Affinitätsgesetze auf die aktuelle Drehzahl der Pumpe erfolgen.

Weitere Merkmale und Vorteile der Erfindung ergeben sich aus der Beschreibung eines Ausführungsbeispiels anhand von Zeichnungen und aus den Zeichnungen selbst. Dabei zeigt:

Figur 1     eine schematische Darstellung der Verarbeitung der einzelnen Parameter,

Figur 2a     eine Übertragung der Wahrscheinlichkeitsdichtefunktion der Förderhöhe,

Figur 2b     eine Übertragung der Wahrscheinlichkeitsdichtefunktion der Leistung,

Figur 2c    eine Kombination der Wahrscheinlichkeitsdichtefunktionen der Förderströme.

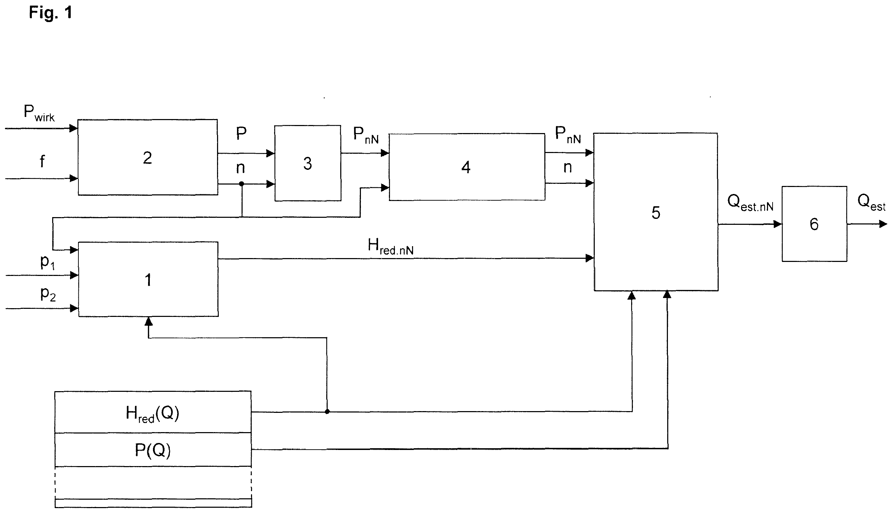

Von Sensoren, welche in Figur 1 nicht dargestellt sind, wird ein Druck $p_2$ auf der Druckseite, insbesondere im Druckstutzen, einer Kreiselpumpe und ein Druck $p_1$ auf der Saugseite, insbesondere im Saugstutzen, der Kreiselpumpe ermittelt. Aus den Drücken $p_1$ und $p_2$ wird in einem Schritt 1 eine reduzierte Förderhöhe $H_{red}$ berechnet. Die Berechnung der Förderhöhe H ist dem Fachmann bekannt. Unter einer reduzierten Förderhöhe $H_{red}$ wird in dieser Anmeldung eine Förderhöhe verstanden, bei der der Geschwindigkeitsterm $(v_2^2 - v_1^2) / 2g$ (mit $v_2$: druckseitige Geschwindigkeit, $v_1$: saugseitige Geschwindigkeit, g: Fallbeschleunigung) weggelassen wird. Bei der Messung des Differenzdrucks $\Delta p = p_2 - p_1$ sind die Messstellen so ausgeführt, dass die Druckverluste zwischen den Messstellen vernachlässigbar sind. Im Ausführungsbeispiel wird eine Flüssigkeit mit einer weitgehend konstanten Dichte gefördert. Die reduzierte Förderhöhe $H_{red}$ liegt somit für die aktuelle Drehzahl der Pumpe vor. Da die Kennlinien der Pumpe i.d.R. für die Nenndrehzahl gelten, wird die reduzierte Förderhöhe $H_{red}$ auf die Nenndrehzahl umgerechnet, so dass sich $H_{red,n.N.}$ ergibt. Diese Umrechnung ist dem Fachmann ebenfalls geläufig [Kreiselpumpenlexikon, KSB, 4. Auflage, 2009, ISBN 978-3-00-029711-3].

Im Ausführungsbeispiel wird mittels eines Frequenzumrichters eine Ansteuerfrequenz f und eine Wirkleistung $P_{wirk}$ des Motors ermittelt. In einem Schritt 2 werden mittels eines Motormodells die Wellenleistung P und die Drehzahl n aus der Ansteuerfrequenz f und der Wirkleistung $P_{wirk}$ ermittelt. Alternativ kann die Wellenleistung mit einer Messeinrichtung, z.B. einer Drehmomentmessnabe, auch unmittelbar ermittelt werden.

In einem Schritt 3 wird aus der aktuellen Wellenleistung P und der Drehzahl n die Wellenleistung $P_{nN}$ bei der Nenndrehzahl berechnet, da die P(Q)-Kennlinie der Pumpe i.d.R. bei der Nenndrehzahl angegeben ist. Die Umrechnung der Wellenleistung auf die Nenndrehzahl ist dem Fachmann bekannt [Kreiselpumpenlexikon, KSB, 4. Auflage, 2009, ISBN 978-3-00-029711-3].

In einem Schritt 4 wird eine Offsetkorrektur der P(Q)-Kennlinie durchgeführt. Dazu wird die für einen Förderstrom von Q=0 bestimmte Leistung $P_{n.N.}$ mit dem Wert in der P(Q)-Kennlinie verglichen, die vom Hersteller erstellt wurde. Die Abweichung wird dann nach Art einer Einpunkt-Kalibrierung beseitigt.

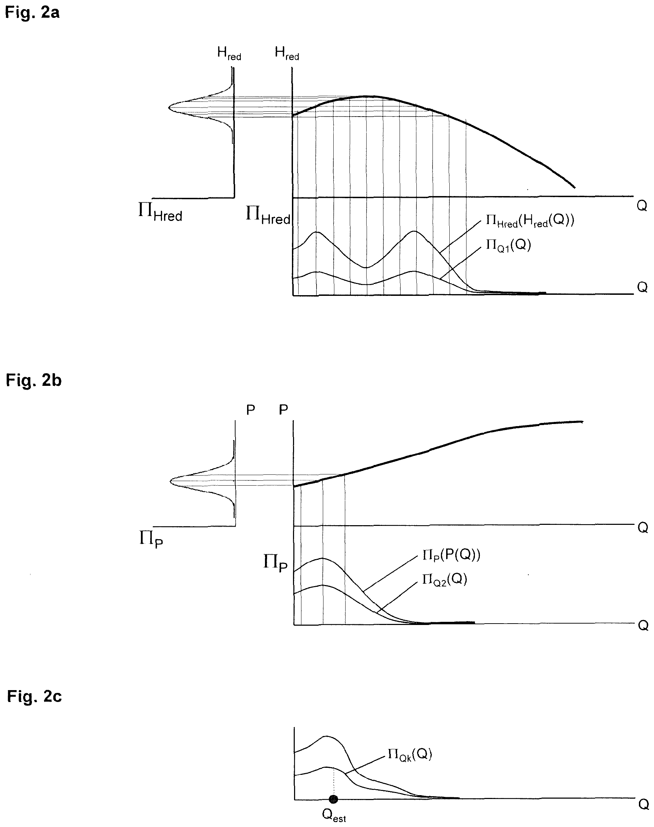

In einem Schritt 5 erfolgt die erfindungsgemäße Datenfusion. Dieser Schritt wird ausführlich in den Figuren 2a, 2b und 2c beschrieben. Der daraus bestimmte Förderstrom für die Nenndrehzahl $Q_{est.nN}$ wird dann in einem Schritt 6 in den Förderstrom Qest der Pumpe umgerechnet. Die Umrechnung des Förderstroms von der Nenndrehzahl auf die aktuelle Drehzahl ist dem Fachmann bekannt [Kreiselpumpenlexikon, KSB, 4. Auflage, 2009, ISBN 978-3-00-029711-3].

Die Berechnungen können in ein oder mehreren elektronischen Auswerte-Einheiten durchgeführt werden. Im Ausführungsbeispiel wird die Berechnung der mechanischen Leistung aus der Ansteuerfrequenz des Motors und der Wirkleistung in einer ersten Einheit durchgeführt, die einem Frequenzumrichter zugeordnet ist. Die Daten werden dann an eine zweite Einheit übermittelt, in der die Pumpenkennlinien hinterlegt sind. Die zweite Einheit führt die erfindungsgemäße Datenfusion zur Bestimmung des Förderstroms durch.

Die Förderhöhen-Förderstrom-Zusammenhänge bzw. Leistung-Förderstrom-Zusammenhänge können als Stützpunkte hinterlegt sein, wobei die Einheit eine Interpolation und/oder Extrapolation durchführt. Alternativ können die Förderhöhen-Förderstrom-Zusammenhänge bzw. Leistung-Förderstrom-Zusammenhänge auch als Funktion, beispielsweise in Form eines Polynoms, hinterlegt sein.

Figur 2a zeigt drei Diagramme. Im oberen linken Diagramm ist die Wahrscheinlichkeitsdichtefunktion $\Pi_{Hred}$ der reduzierten Förderhöhe dargestellt. Die Wahrscheinlichkeitsdichtefunktion $\Pi_{Hred}$ ergibt sich nach der folgenden Formel:

$$\Pi_{Hred} = \frac{1}{\sigma\sqrt{2\pi}}\exp\left(-\frac{1}{2}\left(\frac{H_{red} - H_{red.mess}}{\sigma}\right)^2\right)$$

Dabei bildet der aus den gemessenen Drücken ermittelte Wert für die reduzierte Förderhöhe $H_{red.mess}$ den Erwartungswert. Die Standardabweichung $\sigma$, welche die Breite der Wahrscheinlichkeitsdichtefunktion beschreibt, entspricht in etwa den erwarteten Messfehlern.

In Figur 2a zeigt das Diagramm oben rechts die Pumpenkennlinie $H_{red}$ (Q). Über die Pumpenkennlinie $H_{red}$ (Q) wird jedem Förderstromwert Q eine Wahrscheinlichkeitsdichte $\Pi_{Hred}$ zugeordnet. Das Ergebnis $\Pi_{Hred}$ ($H_{red}$(Q)) wird normiert (Diagramm rechts unten, Figur 2a). Damit ergibt sich eine erste Wahrscheinlichkeitsdichtefunktion $\Pi_{Q1}(Q)$ für die infolge der Normierung gilt: $\int\Pi_{Q1}(Q)dQ = 1$.

Figur 2b zeigt links oben die Wahrscheinlichkeitsdichtefunktion $\Pi_P$ der Wellenleistung P. Diese Funktion berechnet sich nach der folgenden Formel:

$$\Pi_P = \frac{1}{\sigma\sqrt{2\pi}}\exp\left(-\frac{1}{2}\left(\frac{P-P_{mess}}{\sigma}\right)^2\right)$$

Dabei bildet die aktuelle Wellenleistung den Erwartungswert. Die Standardabweichung σ, welche die Breite der Wahrscheinlichkeitsdichte beschreibt, entspricht in etwa den erwarteten Messfehlern.

Im Diagramm rechts oben gemäß Figur 2b ist die Pumpenkennlinie P(Q) aufgetragen, bei der die Wellenleistung in Abhängigkeit des Förderstroms dargestellt ist. Über die Pumpenkennlinie P(Q) wird jedem diskreten Förderstromwert Q eine Wahrscheinlichkeitsdichte $\Pi_P$ zugeordnet. Das Ergebnis $\Pi_P(P(Q))$ wird normiert (Diagramm rechts unten, Figur 2b). Damit ergibt sich eine zweite Wahrscheinlichkeitsdichtefunktion $\Pi_{Q2}(Q)$ für die infolge der Normierung gilt: $\int\Pi_{Q2}(Q)dQ = 1$.

Figur 2c zeigt ein Diagramm, in dem das Produkt der Wahrscheinlichkeitsdichtefunktionen $\Pi_{Q2}(Q)$ und $\Pi_{Q1}(Q)$ in Abhängigkeit des Förderstroms dargestellt ist. Die obere Kurve zeigt die nicht normierten Werte. Die untere Kurve zeigt die normierten Werte. Sie ist die kombinierte Wahrscheinlichkeitsdichtefunktion $\Pi_{Qk}(Q)$ des Förderstroms und wird nachfolgend zur Förderstrombestimmung verwendet.

Der Förderstrom ergibt sich als Erwartungswert der kombinierten Wahrscheinlichkeitsdichtefunktion $\Pi_{Qk}(Q)$ des Förderstroms ($Q_{est}$ Figur 2c). Alternativ kann auch der Maximalwert der Kurve als Förderstrom herangezogen werden. Der Förderstrom als Erwartungswert berechnet nach der folgenden Formel:

$$E(X) = \int_{-\infty}^{\infty} x f(x)\,dx$$

**Patentansprüche**

1. Verfahren zur Bestimmung des Förderstroms einer Pumpe, die von einem Motor angetrieben wird, mit folgenden Schritten:

   - Ermittlung eines Wertes für die Förderhöhe und eines Wertes für die Wellenleistung der Pumpe,
   - Berechnen einer Wahrscheinlichkeitsdichtefunktion der Förderhöhe und einer Wahrscheinlichkeitsdichtefunktion der Wellenleistung,
   - Ermittlung einer ersten Wahrscheinlichkeitsdichtefunktion des Förderstroms aus der Wahrscheinlichkeitsdichtefunktion der Förderhöhe und einem Förderhöhen-Förderstrom-Zusammenhang der Pumpe,
   - Ermittlung einer zweiten Wahrscheinlichkeitsdichtefunktion des Förderstroms aus der Wahrscheinlichkeitsdichtefunktion der Leistung und einem Leistungs-Förderstrom-Zusammenhang der Pumpe,
   - Ermittlung einer kombinierten Wahrscheinlichkeitsdichtefunktion des Förderstroms aus der ersten Wahrscheinlichkeitsdichtefunktion des Förderstroms und der zweiten Wahrscheinlichkeitsdichtefunktion des Förderstroms,
   - Bestimmung des Förderstroms anhand der kombinierten Wahrscheinlichkeitsdichtefunktion.

2. Verfahren nach Anspruch 1, **dadurch gekennzeichnet, dass** die Wahrscheinlichkeitsdichtefunktion für die Förderhöhe und die Wahrscheinlichkeitsdichtefunktion für die Leistung in Form einer Gauß-Funktion berechnet wird.

3. Verfahren nach Anspruch 1 oder 2, **dadurch gekennzeichnet, dass** Zwischenergebnisse normiert werden.

4. Verfahren nach einem der Ansprüche 1 bis 3, **dadurch gekennzeichnet, dass** die kombinierte Wahrscheinlichkeitsdichtefunktion des Förderstroms durch Multiplikation der ersten Wahrscheinlichkeitsdichtefunktion des Förderstroms mit der zweiten Wahrscheinlichkeitsdichtefunktion des Förderstroms ermittelt wird.

5. Verfahren nach einem der Ansprüche 1 bis 4, **dadurch gekennzeichnet, dass** der Förderstrom als Erwartungswert der kombinierten Wahrscheinlichkeitsdichtefunktion ermittelt wird.

6. Verfahren nach einem der Ansprüche 1 bis 5, **dadurch gekennzeichnet, dass** der Förderstrom als Maximum der kombinierten Wahrscheinlichkeitsverteilung ermittelt wird.

7. Verfahren nach einem der Ansprüche 1 bis 6, **dadurch gekennzeichnet, dass** der Leistungs-Förderstrom-Zusammenhang und ein ermittelter Wert der Leistung bei bekanntem Förderstrom durch eine Offsetkorrektur in Einklang gebracht werden.

8. Verfahren nach einem der Ansprüche 1 bis 7, **dadurch gekennzeichnet, dass** zur Ermittlung der Förderhöhe eine Druckdifferenz zwischen Druckseite und Saugseite der Pumpe erfasst wird.

9. Verfahren nach einem der Ansprüche 1 bis 8, **dadurch gekennzeichnet, dass** zur Ermittlung der Leistung eine Ansteuerfrequenz des Motors und eine Wirkleistung erfasst werden.

10. Anordnung zur Bestimmung des Förderstroms einer Pumpe, die von einem Motor angetrieben wird, mit Sensoren zur Bestimmung einer Druckdifferenz zwischen Saugseite und Druckseite der Pumpe, wobei die Anordnung mindestens ein Bauteil zur Bestimmung einer mechanischen Leistung der Pumpe umfasst und mindestens eine Einheit aufweist, welche Messdaten erfasst, wobei in der Einheit ein Förderhöhen-Förderstrom-Zusammenhang und ein Leistungs-Förderstrom-Zusammenhang der Pumpe hinterlegt ist und die Einheit dazu eingerichtet ist, Werte für die Förderhöhe und die Leistung zu ermitteln,
**dadurch gekennzeichnet, dass**
die Einheit dazu eingerichtet ist,

- eine Wahrscheinlichkeitsdichtefunktion für die Förderhöhe und eine Wahrscheinlichkeitsdichtefunktion für die Leistung zu berechnen,
- eine erste Wahrscheinlichkeitsdichtefunktion des Förderstroms aus der Wahrscheinlichkeitsdichtefunktion der Förderhöhe und dem Förderhöhen-Förderstrom-Zusammenhang zu ermitteln,
- eine zweite Wahrscheinlichkeitsdichtefunktion des Förderstroms aus der Wahrscheinlichkeitsdichtefunktion der Leistung und dem Leistungs-Förderstrom-Zusammenhang zu ermitteln,
- eine kombinierte Wahrscheinlichkeitsdichtefunktion des Förderstroms aus der ersten Wahrscheinlichkeitsdichtefunktion des Förderstroms und der zweiten Wahrscheinlichkeitsdichtefunktion des Förderstroms zu ermitteln,
- aus der kombinierten Wahrscheinlichkeitsdichtefunktion den Förderstrom zu bestimmen.

11. Anordnung nach Anspruch 10, **dadurch gekennzeichnet, dass** die Anordnung einen Frequenzumrichter aufweist, der die Ansteuerfrequenz des Motors und die Wirkleistung zur Berechnung der Wellenleistung liefert.

12. Anordnung nach Anspruch 11, **dadurch gekennzeichnet, dass** eine erste Einheit eingerichtet ist, aus der Ansteuerfrequenz des Motors und der Wirkleistung eine Wellenleistung zu berechnen und die Daten an eine zweite Einheit zu übertragen.

13. Anordnung nach Anspruch 10, **dadurch gekennzeichnet, dass** die Anordnung eine Messeinrichtung aufweist, vorzugsweise eine Drehmomentnabe, zur Bestimmung der Wellenleistung.

**Claims**

1. Method for determining the delivery flow of a motor-driven pump, comprising the following steps:

- ascertaining a value for the delivery head and a value for the shaft power of the pump,
- calculating a probability density function for the delivery head and a probability density function for the shaft power,
- ascertaining a first probability density function for the delivery flow from the probability density function for the delivery head and a delivery head-delivery flow relationship of the pump,
- ascertaining the second probability density function for the delivery flow from the probability density function for the power and a power-delivery flow relationship of the pump,
- ascertaining a combined probability density function for the delivery flow from the first probability density function for the delivery flow and the second probability density function for the delivery flow,
- determining the delivery flow on the basis of the combined probability density function.

2. Method according to Claim 1, **characterized in that** the probability density function for the delivery head and the probability density function for the power is calculated in the form of a Gaussian function.

**EP 3 169 903 B1**

3. Method according to Claim 1 or 2, **characterized in that** intermediate results are normalized.

4. Method according to one of Claims 1 to 3, **characterized in that** the combined probability density function for the delivery flow is ascertained by multiplying the first probability density function for the delivery flow by the second probability density function for the delivery flow.

5. Method according to one of Claims 1 to 4, **characterized in that** the delivery flow is ascertained as expected value of the combined probability density function.

6. Method according to one of Claims 1 to 5, **characterized in that** the delivery flow is ascertained as maximum of the combined probability density distribution.

7. Method according to one of Claims 1 to 6, **characterized in that** the power-delivery flow relationship and an ascertained value of the power at a known delivery flow are brought into correspondence by an offset correction.

8. Method according to one of Claims 1 to 7, **characterized in that** a pressure difference between pressure side and suction side of the pump is captured for ascertaining the delivery head.

9. Method according to one of Claims 1 to 8, **characterized in that** an actuation frequency of the motor and the effective power are captured for ascertaining the power.

10. Arrangement for determining the delivery flow of a motor-driven pump, comprising sensors for determining a pressure difference between suction side and pressure side of the pump, wherein the arrangement comprises at least one component for determining a mechanical power of the pump and comprises at least one unit which captures measurement data, wherein a delivery head-delivery flow relationship and a power-delivery flow relationship of the pump are stored in the unit and the unit is configured to ascertain values for the delivery head and the power, **characterized in that**
the unit is configured to

   - calculate a probability density function for the delivery head and a probability density function for the power,
   - ascertain a first probability density function for the delivery flow from the probability density function for the delivery head and the delivery head-delivery flow relationship,
   - ascertain the second probability density function for the delivery flow from the probability density function for the power and the power-delivery flow relationship,
   - ascertain a combined probability density function for the delivery flow from the first probability density function for the delivery flow and the second probability density function for the delivery flow,
   - determine the delivery flow from the combined probability density function.

11. Arrangement according to Claim 10, **characterized in that** the arrangement comprises a frequency converter, which supplies the actuation frequency of the motor and the effective power for calculating the shaft power.

12. Arrangement according to Claim 11, **characterized in that** a first unit is configured to calculate a shaft power from the actuation frequency of the motor and the effective power, and to transfer the data to a second unit.

13. Arrangement according to Claim 10, **characterized in that** the arrangement comprises a measuring device, preferably a torque hub, for determining the shaft power.

**Revendications**

1. Procédé de détermination du débit d'une pompe entraînée par un moteur, comprenant les étapes consistant à :

   - déterminer une valeur de la hauteur de refoulement et une valeur de la puissance de l'arbre de la pompe,
   - calculer une fonction de densité de probabilité de la hauteur de refoulement et une fonction de densité de probabilité de la puissance de l'arbre,
   - déterminer une première fonction de densité de probabilité du débit à partir de la fonction de densité de probabilité de la hauteur de refoulement et d'une relation hauteur de refoulement-débit de la pompe,
   - déterminer une deuxième fonction de densité de probabilité du débit à partir de la fonction de densité de probabilité de la puissance et d'une relation puissance-débit de la pompe,
- déterminer une fonction de densité de probabilité combinée du débit à partir de la première fonction de densité de probabilité du débit et de la deuxième fonction de densité de probabilité du débit,
- déterminer le débit sur la base de la fonction de densité de probabilité combinée.

2. Procédé selon la revendication 1, **caractérisé en ce que** la fonction de densité de probabilité de la hauteur de refoulement et la fonction de densité de probabilité de la puissance sont calculées sous la forme d'une fonction gaussienne.

3. Procédé selon la revendication 1 ou 2, **caractérisé en ce que** les résultats intermédiaires sont normalisés.

4. Procédé selon l'une des revendications 1 à 3, **caractérisé en ce que** la fonction de densité de probabilité combinée du débit est déterminée en multipliant la première fonction de densité de probabilité du débit par la deuxième fonction de densité de probabilité du débit.

5. Procédé selon l'une des revendications 1 à 4, **caractérisé en ce que** le débit est déterminé en tant que valeur attendue de la fonction de densité de probabilité combinée.

6. Procédé selon l'une des revendications 1 à 5, **caractérisé en ce que** le débit est déterminé comme étant le maximum de la distribution de probabilité combinée.

7. Procédé selon l'une des revendications 1 à 6, **caractérisé en ce que** la relation puissance-débit et une valeur déterminée de la puissance pour un débit connu sont amenées à se rapprocher par une correction de décalage.

8. Procédé selon l'une des revendications 1 à 7, **caractérisé en ce qu'**une différence de pression entre le côté refoulement et le côté aspiration de la pompe est détectée pour déterminer la hauteur de refoulement.

9. Procédé selon l'une des revendications 1 à 8, **caractérisé en ce qu'**une fréquence d'entraînement du moteur et une puissance effective sont détectées pour déterminer la puissance.

10. Système de détermination du débit d'une pompe entraînée par un moteur, comprenant des capteurs destinés à déterminer une différence de pression entre le côté aspiration et le côté refoulement de la pompe, dans lequel le système comprend au moins un composant destiné à déterminer une puissance mécanique de la pompe et comprenant au moins une unité qui acquiert des données de mesure, dans lequel une relation hauteur de refoulement-débit et une relation puissance-débit de la pompe est enregistrée dans l'unité et l'unité est conçue pour déterminer des valeurs de la hauteur de refoulement et de la puissance, **caractérisé en ce que** l'unité est conçue pour

- calculer une fonction de densité de probabilité de la hauteur de refoulement et une fonction de densité de probabilité de la puissance,
- déterminer une première fonction de densité de probabilité du débit à partir de la fonction de densité de probabilité de la hauteur de refoulement et de la relation hauteur de refoulement-débit,
- déterminer une deuxième fonction de densité de probabilité du débit à partir de la fonction de densité de probabilité de la puissance et de la relation puissance-débit,
- déterminer une fonction de densité de probabilité combinée du débit à partir de la première fonction de densité de probabilité du débit et de la deuxième fonction de densité de probabilité du débit,
- déterminer le débit à partir de la fonction de densité de probabilité combinée.

11. Système selon la revendication 10, **caractérisé en ce que** le système comprend un convertisseur de fréquence qui délivre la fréquence d'entraînement du moteur et la puissance effective pour calculer la puissance de l'arbre.

12. Système selon la revendication 11, **caractérisé en ce qu'**une première unité est conçue pour calculer une puissance de l'arbre à partir de la fréquence d'entraînement du moteur et de la puissance effective et pour transmettre les données à une deuxième unité.

13. Système selon la revendication 10, **caractérisé en ce que** le système comporte un dispositif de mesure, de préférence un moyeu de couple, pour déterminer la puissance de l'arbre.

Fig. 1

**Fig. 2a**

$\Pi_{Hred}$
$\Pi_{Hred}$

$\Pi_{Hred}(H_{red}(Q))$
$\Pi_{Q1}(Q)$

**Fig. 2b**

$\Pi_P$
$\Pi_P$

$\Pi_P(P(Q))$
$\Pi_{Q2}(Q)$

**Fig. 2c**

$\Pi_{Qk}(Q)$

$Q_{est}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005064167 A1
- DE 102009022107 A1

- EP 2696175 A1

**In der Beschreibung aufgeführte Nicht-Patentliteratur**

- Kreiselpumpenlexikon. KSB, 2009